(19) Europäisches Patentamt

European Patent Office

Office européen des brevets

(11) **EP 1 212 238 B1**

(12) **FASCICULE DE BREVET EUROPEEN**

(45) Date de publication et mention
de la délivrance du brevet:
**26.11.2003 Bulletin 2003/48**

(51) Int Cl.⁷: **B64C 29/00**, B64C 27/28,
B64C 13/50, B64C 13/16,
B64C 9/00

(21) Numéro de dépôt: **00962625.0**

(22) Date de dépôt: **13.09.2000**

(86) Numéro de dépôt international:
**PCT/FR00/02527**

(87) Numéro de publication internationale:
**WO 01/019673 (22.03.2001 Gazette 2001/12)**

(54) **PERFECTIONNEMENTS AUX AERONEFS CONVERTIBLES A ROTORS BASCULANTS**

VERBESSERTES SCHWENKROTOR-VERWANDLUNGSFLUGZEUG

IMPROVEMENTS TO CONVERTIBLE AIRCRAFT WITH TILTING ROTORS

(84) Etats contractants désignés:
**DE ES GB IT NL**

(30) Priorité: **14.09.1999 FR 9911471**

(43) Date de publication de la demande:
**12.06.2002 Bulletin 2002/24**

(73) Titulaire: **EUROCOPTER**
**13725 Marignane Cédex (FR)**

(72) Inventeurs:
• **KRYSINSKI, Thomasz**
**F-13008 Marseille (FR)**
• **FERRER, Rogelio**
**F-13012 Marseille (FR)**

• **MANFREDOTTI, Thomas**
**F-13100 Aix-en-Provence (FR)**
• **MAGRE, Eric**
**F-13127 Vitrolles (FR)**
• **KLEIN, Jean-Marc**
**F-13320 Bouc Bel Air (FR)**

(74) Mandataire: **Bérogin, Francis**
**Cabinet Plasseraud**
**84, rue d'Amsterdam**
**75440 Paris Cedex 09 (FR)**

(56) Documents cités:
EP-A- 0 416 590      US-A- 3 107 882
US-A- 3 666 209      US-A- 5 054 716
US-A- 5 405 105

## Description

L'invention concerne des perfectionnements apportés à des aéronefs convertibles à rotors basculants, pouvant évoluer en mode avion et en mode hélicoptère, et du type comprenant au moins un fuselage, au moins un empennage avec au moins une dérive, une voilure fixe comportant au moins deux ailes s'étendant latéralement de part et d'autre dudit fuselage, et, en mode hélicoptère, une voilure tournante comportant au moins deux rotors, dont chacun est supporté et entraîné en rotation par l'une respectivement de deux nacelles motrices supportées chacune par l'une respectivement des deux ailes fixes s'étendant du fuselage jusqu'à la nacelle correspondante, chaque rotor étant monté basculant avec au moins une partie avant, qui supporte ledit rotor, de la nacelle correspondante, sur l'aile fixe correspondante et autour d'un axe de basculement sensiblement transversal par rapport au fuselage, pour passer de l'un à l'autre du mode hélicoptère et du mode avion, dans lequel les rotors servent d'hélice.

De manière connue, ces aéronefs convertibles peuvent fonctionner en mode ou configuration hélicoptère, en particulier pour les atterrissages et décollages, au cours desquels les rotors tournent au-dessus des ailes fixes, autour d'axes sensiblement verticaux pour assurer la sustentation de l'aéronef, et en mode ou configuration avion, dans lequel ou laquelle les rotors sont basculés par rapport aux ailes fixes pour fonctionner comme des hélices.

Chaque rotor a son arbre relié par une transmission respective à un moteur respectif, la transmission et le moteur étant logés dans la nacelle correspondante supportée par l'aile fixe correspondante, un arbre d'interconnexion reliant les deux transmissions, pour l'entraînement en rotation des deux rotors par l'un quelconque des deux moteurs, en cas de défaillance de l'autre moteur.

US-A-5,054,716 décrit un premier exemple d'aéronef convertible de ce type, sur lequel chacun des rotors constitue, avec ses moyens de commande, le moteur correspondant et la transmission correspondante, un ensemble basculant logé, à l'exception des pales et du moyeu du rotor, dans une nacelle montée tout entière pivotante en porte-à-faux au bout d'une aile fixe correspondante.

Une telle architecture présente de nombreux inconvénients, mentionnés dans la demande de brevet FR 99 03735, qui décrit une autre architecture d'aéronef convertible de ce type, remédiant aux inconvénients précités, et dans laquelle chaque transmission comporte un ensemble réducteur avant, entraînant le rotor en rotation, et un ensemble réducteur arrière, en prise avec l'ensemble réducteur avant correspondant et relié au moteur correspondant, ainsi qu'à l'arbre d'interconnexion reliant les deux transmissions. Chacune des deux nacelles est articulée et comporte une partie avant, montée basculante, autour de l'axe de basculement, sur une partie arrière fixe de nacelle, fixée à l'aile fixe correspondante, et dans laquelle partie arrière de nacelle sont logés le moteur correspondant et au moins en partie l'ensemble réducteur arrière de la transmission correspondante. L'ensemble réducteur avant ainsi que l'arbre du rotor correspondant sont logés dans la partie avant basculante de nacelle, et sont montés basculants avec ladite partie avant par rapport à ladite partie arrière et ladite aile correspondante.

Quelle que soit leur architecture, avec nacelles entièrement basculantes avec les rotors, ou avec nacelles articulées dont seules les parties avant basculent avec les rotors par rapport aux ailes fixes, les aéronefs convertibles du type précité posent, en terme de contrôle de vibrations, de nouveaux problèmes très éloignés de ceux posés par les hélicoptères. En effet, l'architecture particulière des aéronefs convertibles, avec des rotors et éventuellement des moteurs basculants en bout d'aile, rend très difficile la filtration des vibrations par interposition d'éléments anti-résonnants, comme cela est pratiqué sur les hélicoptères.

Par contre, l'utilisation de systèmes de filtration de vibrations par résonnateurs ou par générateurs d'efforts pilotés par calculateurs est connue, mais ces systèmes comportent généralement des ensembles à masses et ressorts qui sont très pénalisants en poids.

Par ailleurs, sur un aéronef convertible du type précité, le contrôle du roulis en mode avion est normalement assuré par l'utilisation de surfaces orientables de commande et/ou contrôle, montées pivotantes chacune autour d'un axe sensiblement transversal à l'aéronef, le long du bord de fuite de chacune des ailes fixes, et ces surfaces orientables servent également à assurer l'hypersustentation de l'aéronef à faible vitesse en mode avion et la réduction de la déportance de l'aile en mode hélicoptère.

Comme la commande de roulis demande une dynamique rapide, chaque aile fixe comporte un nombre relativement élevé de telles surfaces de commande et/ou contrôle le long de son bord de fuite, et ces surfaces orientables doivent être commandées par un grand nombre d'actionneurs et peuvent être reliées par des liaisons mécaniques complexes autorisant notamment des braquages négatifs (vers le haut) ainsi que des braquages dissymétriques de ces surfaces entre les deux ailes, tout en limitant les risques d'embarquement en roulis liés à des braquages dissymétriques de ces surfaces orientables, dénommées par le terme anglais « flaperon », car pouvant remplir les fonctions de volet et d'aileron, et donc de gouvernes d'hypersustentation et de gauchissement. US-A-5,094,412 décrit des moyens de structure et de commande complexes de tels « flaperons », également dénommés « élevons », pour un aéronef convertible selon US-A-5,054,716 précité.

Le problème à la base de l'invention est de perfectionner les aéronefs convertibles du type précité sur le plan du contrôle actif des vibrations, en évitant l'ajout de masses importantes supplémentaires pour contrer essentiellement les excitations provoquées par les rotors.

A l'effet de résoudre le problème à la base de l'invention et tel que présenté ci-dessus, l'aéronef convertible selon l'invention se caractérise en ce que chaque aile fixe est prolongée, sensiblement selon son envergure et vers l'extérieur de la nacelle correspondante par rapport au fuselage, par au moins une portion externe de voilure, dont au moins une partie pivote, indépendamment du rotor et d'au moins la partie avant de la nacelle correspondante, autour d'un axe d'articulation sensiblement transversal à l'aéronef et constitue une surface de commande et/ou de contrôle orientable, dont les pivotements autour de l'axe d'articulation sont commandés au moins à une fréquence de l'ordre de KbΩ, où b et Ω sont respectivement le nombre de pales et la fréquence de rotation de chaque rotor, et K un nombre entier au moins égal à 1, par au moins un actionneur piloté, de sorte à au moins atténuer, au niveau du fuselage des ailes fixes et des empennage(s) et dérive(s), au moins les vibrations générées naturellement par chaque rotor en rotation.

Outre le contrôle des vibrations générées par les rotors en fonctionnement normal, ou vibrations naturelles propres aux rotors et générées en axe tournant, les surfaces de commande et/ou de contrôle orientables et externes, en bout d'aile, peuvent être utilisées pour effectuer un contrôle actif des vibrations produites par l'un et/ou l'autre des phénomènes dits de « whirl flutter » (ou flottement gyroscopique) et de « tail shake », dont on rappelle que le premier phénomène est une instabilité aéroélastique, provenant du bouclage entre un rotor et l'aile correspondante à haute vitesse en mode avion, tandis que le second phénomène correspond à des vibrations de la poutre de queue ou des parties arrière des nacelles et du fuselage d'un aéronef convertible, lesdites poutre de queue ou parties arrière des nacelles et du fuselage étant excitées par le souffle des rotors à des fréquences de quelques Hertz, et proches fréquemment de 4 Hz. Ce contrôle actif permet de réduire la raideur, et donc la masse, de chaque aile pour une vitesse maximale donnée et/ou d'augmenter la vitesse maximale de l'aéronef.

A cet effet, les pivotements de la surface de commande et/ou de contrôle orientable sont transitoirement commandés par l'actionneur piloté à une fréquence inférieure à KbΩ et de l'ordre de 4 à 6 Hz, pour contrer le phénomène de « whirl flutter », ou de l'ordre de quelques Hz, en général de l'ordre de 4 Hz, pour contrer le phénomène de « tail shake ».

Dans leur intégration à un système anti-vibratoire actif, les surfaces de commande et/ou de contrôle orientables externes, agencées en élevons fonctionnant en petits ailerons pilotés ou volets aérodynamiques actifs, situés en bout d'aile, génèrent des forces aérodynamiques, qui sont utilisées pour contrer les excitations provoquées par les rotors, en évitant l'ajout de masses supplémentaires.

Un aéronef convertible du type présenté ci-dessus est ainsi équipé d'un système anti-vibratoire auto-adaptatif basé sur les surfaces de commande et/ou de contrôle orientables externes, ou élevons externes, fonctionnant comme des ailerons pilotés et/ou des volets aérodynamiques actifs en bout d'aile, et dont l'angle de braquage, et donc l'incidence, est piloté par au moins un calculateur commandant au moins un actionneur de manoeuvre, un premier actionneur étant commandé à la fréquence bΩ, un éventuel second actionneur étant commandé à la fréquence 2bΩ, un éventuel troisième actionneur à la fréquence 3bΩ, etc ..., afin de générer des forces aérodynamiques dirigées contre les forces d'excitation des rotors, et permettant ainsi de minimiser le niveau vibratoire dans le fuselage, les empennage(s) et dérive(s), les ailes fixes et les éventuelles parties arrière fixes des nacelles de l'aéronef, ce système anti-vibratoire étant particulièrement bien adapté au fonctionnement en mode avion.

A cet effet, de manière avantageuse, l'actionneur est un vérin d'excitation, asservi en déplacement, manoeuvrant la surface de commande et/ou de contrôle orientable, à l'encontre de moyens élastiques d'accord statique et dynamique, et piloté automatiquement par au moins un calculateur de contrôle actif et auto-adaptatif de vibrations, qui pilote le vérin à partir de signaux reçus de capteurs, notamment d'efforts, accélérométriques et gyrométriques, disposés en au moins des points déterminés du fuselage et/ou des rotors, et/ou des empennage(s) et dérive(s), notamment.

Avantageusement, les moyens élastiques reprennent les efforts statiques de la surface orientable, et, en dynamique, leur raideur est couplée à l'inertie de l'ensemble en déplacement comprenant au moins ladite surface orientable et les parties mobiles du vérin de sorte à créer un système résonant du deuxième ordre, la fréquence de résonance de l'ensemble en déplacement étant ajustée sur la fréquence d'excitation du vérin, ce qui permet de réduire considérablement les efforts de commande, et donc la taille du vérin.

En pratique, l'ensemble en déplacement a une fréquence de résonance

$$f = \frac{1}{2\pi} \cdot \sqrt{\frac{k}{I}},$$

où k est la raideur des moyens élastiques (25) et I est l'invertie de l'ensemble en déplacement, et la fréquence d'excitation du vérin est normalement ajustée sur bΩ, tel que b Ω est sensiblement égal à f.

Lorsque les deux rotors de l'aéronef convertible sont des rotors tripales, et compte tenu de la vitesse de rotation nominale des rotors, la fréquence d'excitation du vérin est normalement ajustée sensiblement sur une fréquence d'environ 20 Hz.

De plus, pour contrer les phénomènes de « tail shake » et « whirl flutter », la fréquence d'excitation du vérin est avantageusement transitoirement ajustée sur une fréquence d'environ 4 Hz à environ 6 Hz, lorsque lesdits capteurs détectent des signaux témoignant de l'un au moins de ces deux phénomènes, puis, après atténuation voire disparition du phénomène, la fréquence d'excitation du vérin est à nouveau ajustée sensiblement sur la fréquence bΩ.

Une telle surface orientable externe (à l'extérieur d'une nacelle) peut recevoir également une commande différentielle, par rapport à la surface orientable à l'extérieur de l'autre nacelle, et fonctionner en aileron commandant le gauchissement et permettant le contrôle de l'aéronef en roulis en mode avion, avec la dynamique rapide requise, la commande de roulis assurée par les surfaces orientables externes étant ainsi découplée des fonctions d'hypersustentation et de réduction de portance pouvant être remplies, avec une dynamique plus lente, par d'autres surfaces de commande et/ou de contrôle orientables internes (entre les nacelles et le fuselage) sur les bords de fuite des ailes fixes.

Dans cette variante, le vérin d'excitation de chaque élevon ou surface orientable externe est également pilotable par des commandes pilotes (actionnées par l'équipage de l'aéronef convertible), notamment de gauchissement. Dans ce cas, la commande du vérin d'excitation par le calculateur de contrôle de vibrations est neutralisée pendant la commande du vérin d'excitation par les commandes pilotes.

On connaît par EP-0 416 590 et US-3,666,209 des aéronefs convertibles dont la voilure comprend des surfaces aérodynamiques portantes et pivotantes à l'extérieur (selon l'envergure) de nacelles motrices et d'une portion d'aile interne fixe. Mais chaque nacelle motrice pivote avec une partie d'aile autour de l'axe de basculement, de sorte que ces convertibles présentent la troisième architecture d'aéronef convertible précitée dite « tiltwing », et leurs surfaces aérodynamiques pivotantes et externes sont destinées à corriger des variations d'attitude de l'aéronef autour de son centre de gravité, et sont donc des gouvernes activées par l'intermédiaire des commandes de vol situées dans le poste de pilotage. Chaque commande de vol ou commande pilote permet de déplacer l'aéronef autour de l'un de ses axes de roulis, tangage et lacet.

Selon les cas, ces surfaces mobiles sont assimilables à des ailerons permettant le gauchissement (rotation autour de l'axe de roulis) en vol en mode avion ou un mouvement de lacet en vol vertical en mode hélicoptère.

Selon la présente invention, les parties pivotantes des portions externes de voilure sont, contrairement à EP-0 416 590 et US-3,666,209, des élevons, dont les fonctions ont été définies ci-dessus, et qui sont auto-pilotés pour minimiser, dans la structure de l'aéronef, des vibrations qui sont au moins des trois types précités : vibrations générées par les rotors en fonctionnement normal, et par les phénomènes de « tail shake » et « whirl flutter ».

Les surfaces orientables externes peuvent également être utilisées pour réduire les taux de descente de l'aéronef en autorotation des rotors (en cas de panne des deux moteurs) en participant à la portance de l'aéronef si ces surfaces orientables externes sont orientées dans le lit du vent.

Par ailleurs, la présence de ces surfaces orientables externes a pour conséquence d'augmenter l'allongement aérodynamique des ailes, et donc de réduire la traînée induite, ce qui améliore les performances en mode avion en montée, croisière et en finesse, d'où un taux de descente réduit en vol sans puissance (panne de moteur).

Par analogie avec la réalisation des ailerons et volets classiques, la partie pivotante ou surface de commande et/ou de contrôle orientable de chaque portion externe de voilure peut être un élevon pivotant de bord de fuite d'une portion d'aile externe et fixe, qui constitue ainsi le bout de l'aile fixe correspondante, au-delà de la nacelle correspondante. Mais, dans une seconde réalisation, chaque portion externe de voilure peut être une partie d'aile externe entièrement pivotante autour de l'axe d'articulation, de sorte que toute la partie de voilure à l'extérieur d'une nacelle peut être agencée comme un élevon pivotant autour de son axe d'articulation par rapport à la nacelle adjacente et à l'aile fixe correspondante.

Avantageusement, l'aéronef convertible selon l'invention est tel que ses ailes fixes sont des ailes hautes solidarisées à la partie supérieure du fuselage, pour maintenir les nacelles et donc les rotors à une hauteur suffisante, garantissant une garde au sol minimum des rotors pour permettre un atterrissage en mode avion, cette garde au sol étant augmentée et/ou le diamètre des rotors étant augmenté si les ailes hautes sont surélevées par rapport à la partie supérieure du fuselage.

Mais, avantageusement de plus, les ailes fixes et hautes présentent un dièdre vers le haut (dièdre positif), entre le fuselage et les nacelles, ce qui, simultanément, permet d'augmenter encore la garde au sol et/ou le diamètre des rotors, et permet de limiter la pénalité en traînée due à la position surélevée des ailes fixes au-dessus du fuselage.

Des ailes fixes surélevées par rapport au fuselage et avec un dièdre vers le haut améliorent incontestablement la capacité d'atterrissage avec les rotors en mode avion.

A l'extérieur des nacelles, les portions externes de voilure comportant les surfaces de commande et/ou de contrôle orientables externes, ou agencées en de telles surfaces orientables externes, peuvent également présenter un dièdre positif (vers le haut) ou nul (être sensiblement horizontales), mais, avantageusement, pour compenser au moins partiellement les éventuels effets aérodynamiques désavantageux du dièdre positif des ailes fixes, les portions externes de voilure peuvent présenter un dièdre négatif (vers le bas), de sorte que la voilure fixe de l'aéronef est sensiblement en ailes de mouette.

Il est à noter que les caractéristiques relatives aux ailes fixes hautes, surélevées, présentant un dièdre vers le haut et éventuellement prolongées, à l'extérieur des nacelles, par des portions externes de voilure avec un dièdre positif, nul ou négatif, peuvent être utilisées sur un aéronef convertible du type présenté ci-dessus indépendamment des autres caractéristiques présentées ci-dessus et relatives à la structure, la disposition, la manoeuvre et la commande des surfaces de commande et/ou de contrôle orientables externes de l'aéronef convertible, et inversement. En effet, de telles surfaces orientables externes peuvent équiper les bouts d'ailes d'une voilure fixe d'aéronef convertible dont les ailes fixes ne sont pas des ailes hautes ni surélevées ni en dièdre positif.

L'invention sera mieux comprise, et d'autres caractéristiques et avantages de l'invention ressortiront de la description donnée ci-dessous, à titre non limitatif, d'exemples de réalisation décrits en référence aux dessins annexés sur lesquels :

- les figures 1, 2 et 3 sont des vues schématiques respectivement en élévation latérale, de face et en plan d'un premier exemple d'aéronef convertible équipé d'une voilure fixe en ailes de mouette et de portions externes de voilure agencées en parties d'ailes externes entièrement pivotantes autour d'axes d'articulation, et constituant donc des élevons fonctionnant comme des ailerons pilotés et/ou comme des volets aérodynamiques actifs,
- la figure 4 est une vue schématique partielle en plan d'un second exemple de réalisation, en mode avion,
- la figure 5 est une vue schématique en coupe de la surface orientable externe de l'exemple de la figure 4 et de ses moyens de manoeuvre et de commande,
- la figure 6 est une variante de la réalisation de la figure 4, et
- la figure 7 est une courbe représentant, en fonction de la fréquence, l'amplification de l'amplitude des mouvements de l'élevon par rapport à l'amplitude des excitations du vérin de commande, dans un système mécanique selon la figure 5.

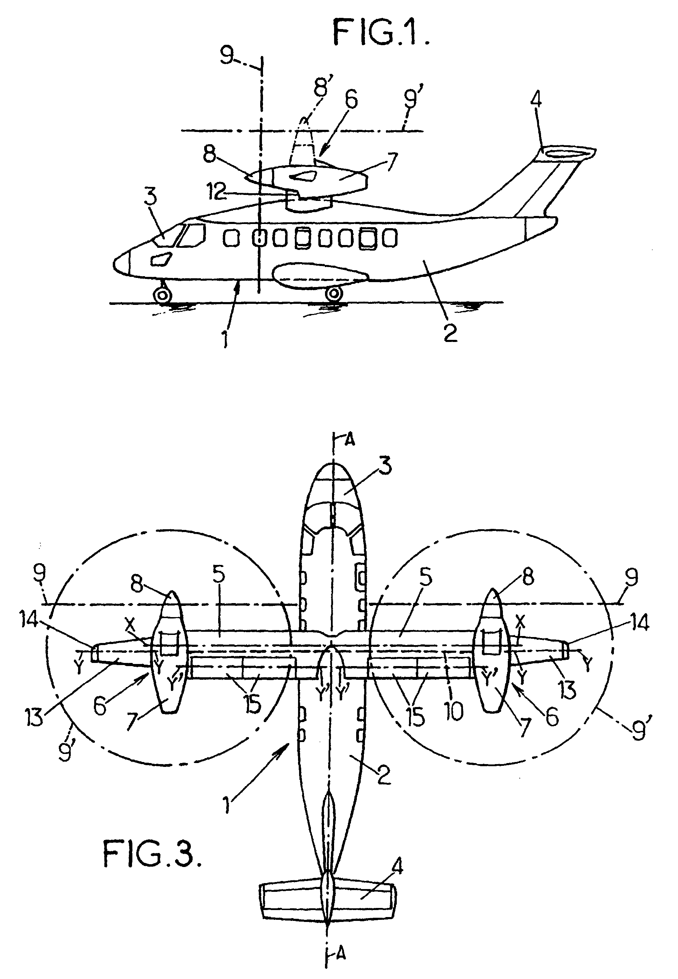

L'aéronef convertible 1 des figures 1 à 3 comprend un fuselage 2, du type fuselage d'avion, avec un poste de pilotage 3 à l'avant et un empennage 4 en « T » avec dérive(s) à l'arrière, et deux ailes fixes et hautes 5, dans cet exemple à flèche nulle et corde constante (rectangulaire en plan), s'étendant, de manière conventionnelle, latéralement de chaque côté du fuselage 2, chaque aile fixe 5 supportant, à son extrémité externe selon son envergure, du côté opposé au fuselage 2, une nacelle motrice 6 articulée, fixée par sa partie arrière 7 sur l'aile 5 correspondante. En variante, l'empennage 4 peut avoir une autre configuration géométrique, par exemple en croix, ou en « V », ou bi-dérive, ou autre.... L'aéronef convertible peut être équipé d'un ou plusieurs empennages 4 équipé(s) d'une ou plusieurs dérives.

Chaque nacelle 6 comporte une partie avant 8, aérodynamiquement profilée, sensiblement en forme d'ogive, et montée basculante, par rapport à la partie arrière fixe 7 de la nacelle 6, et donc par rapport à l'aile 5 correspondante, autour d'un axe de basculement X-X, qui est transversal au fuselage 2, et plus particulièrement perpendiculaire au plan longitudinal de symétrie passant par l'axe longitudinal A-A de l'aéronef 1.

Dans cette configuration aérodynamique de l'aéronef, l'axe de basculement X-X est parallèle au plan perpendiculaire à l'axe longitudinal A-A de l'aéronef 1 et contenant les lignes droites passant par les foyers aérodynamiques des ailes 5, l'axe de basculement X-X étant légèrement en arrière des lignes des foyers situées à une distance du bord d'attaque des ailes 5 qui est d'environ 25 % de la valeur de la corde des ailes 5, en direction de leur bord de fuite.

Sur la partie avant basculante 8 de chaque nacelle 6, un rotor, par exemple à trois ou quatre pales, et schématisé par le disque rotor 9, est monté en rotation autour de son axe et également basculant autour de l'axe X-X avec la partie avant de nacelle 8 correspondante, chaque rotor 9 ayant un arbre relié, pour son entraînement en rotation, par une transmission à un groupe turbo-moteur fixé dans la partie arrière fixe 7 de la nacelle 6 correspondante, selon un agencement plus précisément décrit dans FR 99 03735, auquel on se reportera pour davantage de précisions à ce sujet, et qui est incorporé dans le présent mémoire descriptif par voie de référence.

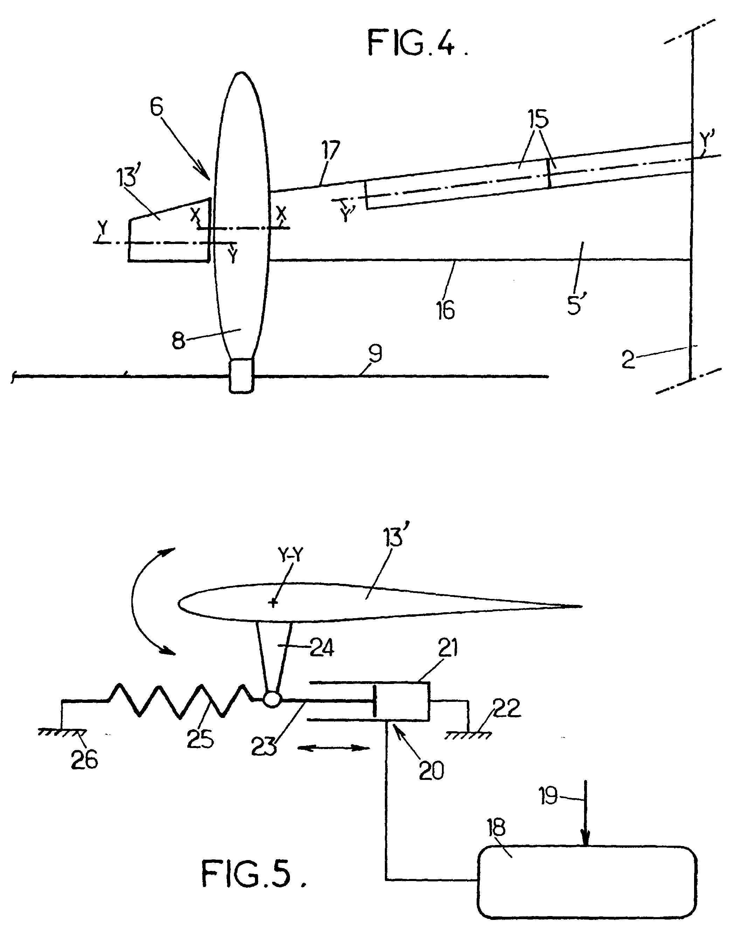

Pour assurer l'entraînement des deux rotors 9 lorsque l'un quelconque des groupes turbo-moteur est défaillant, et quelle que soit l'inclinaison des rotors 9 et des parties avant basculantes 8 des nacelles 6 autour de l'axe de basculement X-X, les deux transmissions sont reliées l'une à l'autre par un arbre d'interconnexion, schématisé en 10 sur la figure 3. On se reportera également à FR 99 03735 pour des précisions sur les différentes connexions possibles de l'arbre d'interconnexion 10 aux deux transmissions des rotors 9. L'arbre 10 est essentiellement constitué de deux parties rectilignes, s'étendant chacune entre le fuselage 2 et l'une respectivement des nacelles 6, sur toute l'envergure de l'aile fixe 5 correspondante, cette partie d'arbre 10 étant sensiblement parallèle au plan perpendiculaire à l'axe longitudinal A-A et passant par l'axe de basculement X-X, mais décalé par rapport à ce plan, par exemple vers l'arrière des ailes 5 (voir figure 3), les deux parties rectilignes de l'arbre d'interconnexion 10 étant accouplées l'une à l'autre, sur le dessus du fuselage 2 , et à un boîtier d'entraînement d'accessoires logé dans un caisson de surélévation 11 par lequel les ailes fixes et hautes 5 sont solidarisées à la partie supérieure du fuselage 2, en étant surélevées par rapport à ce fuselage 2.

Pour que chaque rotor 9, basculant avec la partie avant basculante 8 de la nacelle 6 correspondante, puisse être entraîné en rotation autour de son axe par le groupe turbo-moteur logé dans la partie arrière fixe 7 de cette nacelle 6 ou par l'arbre d'interconnexion 10 entraîné à partir de l'autre groupe turbo-moteur logé dans la nacelle 6 de l'autre aile 5, chaque transmission, qui comporte une roue libre pour neutraliser les différences de régime de rotation des moteurs, comporte une partie avant de transmission ou ensemble réducteur avant, qui entraîne l'arbre du rotor 9 et est monté (e) basculant avec lui autour de l'axe de basculement X-X, à l'intérieur de la partie avant basculante 8 de la nacelle 6, l'ensemble réducteur avant restant en permanence en prise avec une partie arrière de la transmission ou ensemble réducteur arrière non basculant, en permanence en prise avec une prise de mouvement à l'extrémité correspondante de l'arbre d'interconnexion 10 et avec un arbre de sortie du groupe turbo-moteur correspondant. L'ensemble réducteur arrière non basculant occupe une position fixe par rapport au groupe turbo-moteur, à la partie arrière 7 de la nacelle 6 correspondante, à l'arbre d'interconnexion 10, et donc aux ailes 5, et est partiellement logé dans la partie arrière fixe 7 de la nacelle 6 et éventuellement dans l'un au moins des raccords aérodynamiquement profilés ou karman de liaison entre la partie de nacelle arrière fixe 7 et l'aile 5 correspondante.

L'aéronef convertible 1 est ainsi équipé de deux rotors basculants, pouvant chacun être basculé entre une configuration hélicoptère, dans laquelle les rotors sont repérés en 9' sur des parties avant de nacelle repérées en 8', et dans laquelle chaque rotor 9' est entraîné autour d'un axe de rotation sensiblement vertical, pour le fonctionnement de l'aéronef en mode hélicoptère, et une configuration avion, dans laquelle chaque rotor repéré en 9 (sur les figures 1 à 3) à l'avant d'une partie avant de nacelle repérée en 8 se comporte comme une hélice entraînée en rotation autour d'un axe sensiblement aligné avec la direction du vol, pour le fonctionnement de l'aéronef en mode avion.

De manière pratique, la partie avant basculante 8 de chaque nacelle 6 bascule par une portion arrière centrale entre deux extensions latérales avant de la partie arrière fixe 7 de cette nacelle 6, comme décrit dans FR 99 03956.

Pour une bonne alimentation en air du moteur, fixé dans cette partie arrière fixe 7, cette dernière présente une prise d'air inférieure 12, fixe et s'ouvrant vers l'avant sous la partie avant basculante 8 de la nacelle 6.

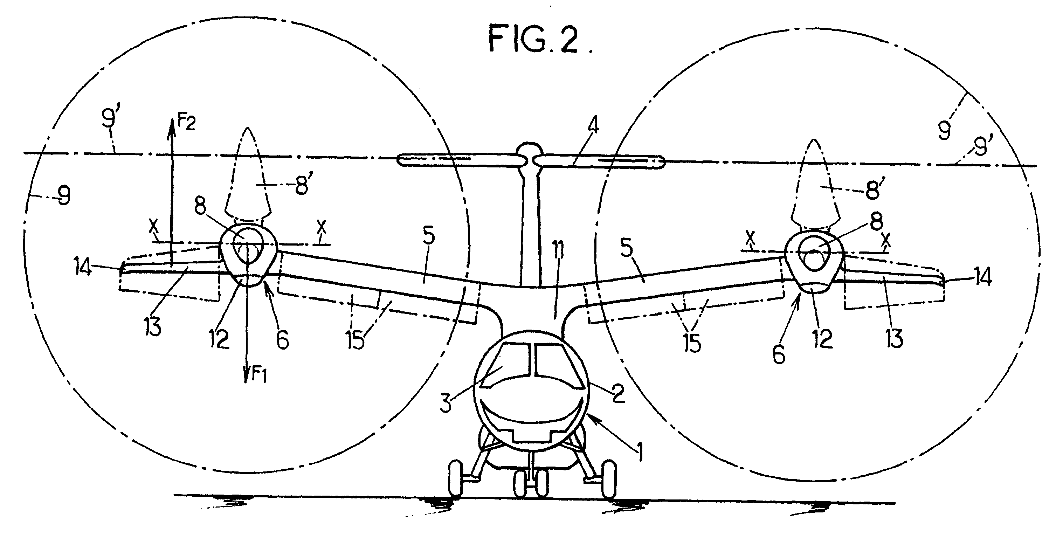

Les ailes fixes 5, surélevées en 11 sur le fuselage 2, présentent de plus un dièdre positif (voir figure 2), c'est-à-dire que chacune d'elles est relevée vers le haut, par rapport à leur liaison surélevée 11 au fuselage 2, du côté de son extrémité supportant la nacelle 6. Les nacelles 6, et donc les rotors 9, sont ainsi surélevé(e)s par rapport au sol de sorte qu'il subsiste une garde au sol suffisante entre les rotors 9 et le sol, même lorsque les rotors 9 sont de relativement grand diamètre, pour permettre à l'aéronef 1 d'atterrir avec les rotors 9 en configuration avion, en particulier en cas de panne des deux moteurs, les rotors 9 étant alors en autorotation, débrayés des moteurs, mais l'atterrissage de l'aéronef en mode avion est également possible avec des rotors 9 entraînés par les moteurs ou à l'arrêt.

L'adoption d'ailes 5 surélevées avec un dièdre positif permet donc l'atterrissage de l'aéronef 1 sans dommage, quelle que soit la position des rotors 9, et cette possibilité réduit la criticité des systèmes de basculement des rotors 9. En cas de panne des deux moteurs en mode avion, l'aéronef peut descendre en vol plané et atterrir sans avoir à basculer les rotors 9 en mode hélicoptère avant l'atterrissage.

A noter que l'espace dégagé dans le caisson de rehaussement 11 au-dessus du fuselage 2 pour rehausser les ailes 5 permet de loger des accessoires supplémentaires, tels qu'alternateurs, pompes hydrauliques, etc ..., entraînés par la boîte de transmission intermédiaire qui est logée dans ce caisson de rehaussement 11 et assure l'interconnexion des deux parties de l'arbre d'interconnexion 10. Ceci simplifie l'intégration du moteur et de la partie arrière de transmission dans chaque nacelle 6 et permet de réduire la taille des nacelles 6.

Le dièdre positif des ailes 5 permet non seulement de surélever suffisamment les rotors 9 pour rendre possible un atterrissage en mode avion, mais également d'utiliser des rotors 9 d'une taille suffisamment grande pour être dimensionnés afin d'optimiser les performances en vol stationnaire, avec commande de pas cyclique et collectif pour un bon comportement en mode hélicoptère et en conversion de l'un à l'autre des deux modes avion et hélicoptère.

En outre, la pénalité en traînée, due à la présence du caisson de rehaussement 11 permettant la position surélevée des ailes 5 au-dessus du fuselage 2, est limitée par l'utilisation d'ailes 5 avec un dièdre positif.

Ces avantages découlant d'ailes 5 en dièdre positif s'ajoutent à ceux procurés par des ailes fixes, à savoir la limitation de la traînée en vol d'avancement en mode hélicoptère par rapport à une aile partiellement ou totalement basculante, et l'obtention d'un bon comportement en cours de conversion, car les ailes 5 ne viennent pas en décrochage. Cette limitation de la traînée en vol d'avancement en mode hélicoptère permet d'améliorer les performances au décollage, en cas de panne d'un moteur.

Selon une autre caractéristique particulière à l'aéronef convertible 1, la voilure de l'aéronef 1 comporte, sensiblement dans le prolongement de chaque aile 5, selon son envergure et à l'extérieur de la nacelle 6 correspondante, c'est-à-dire du côté opposé au fuselage 2, une portion externe de voilure 13, dont au moins une partie pivote autour d'un axe d'articulation Y-Y sensiblement transversal à l'aéronef 1, et de préférence contenu dans un plan perpendiculaire à l'axe longitudinal A-A de l'aéronef 1, c'est-à-dire dans un plan parallèle à l'axe de basculement X-X des rotors 9 avec au moins les parties avant 8 des nacelles 6 et les parties avant des transmissions.

Dans l'exemple des figures 1 à 3, chaque portion externe de voilure 13 est une partie d'aile externe entièrement pivotante autour de l'axe d'articulation Y-Y. Chacune des deux parties d'aile externe 13, de forme en plan sensiblement trapézoïdale (voir figure 3), et dont les bords d'attaque et de fuite rectilignes convergent l'un vers l'autre latéralement vers l'extérieur et sont raccordés par un petit saumon 14 d'extrémité, constitue une surface de commande et/ou de contrôle qui est orientable, et les pivotements de chacune autour de son axe d'articulation Y-Y sont commandés par un actionneur, tel qu'un vérin, piloté par un calculateur pouvant être intégré aux calculateurs des commandes pilote. Ces surfaces orientables 13 remplissent les fonctions d'ailerons pilotés et/ou de volets aérodynamiques actifs, situés aux extrémités des ailes 5, au-delà des nacelles 6, et constituent donc des élevons, pouvant fonctionner en gouverne de profondeur comme en gouverne de gauchissement. L'axe d'articulation Y-Y permet de contrôler l'incidence de chaque élevon 13, et son vérin de manoeuvre (non représenté) est asservi en déplacement et piloté en permanence par le calculateur pour commander le braquage de l'élevon 13.

Commandés comme des ailerons, les élevons 13 orientables, situés à l'extérieur des nacelles 6, permettent de contrôler l'aéronef 1 en roulis en mode avion, cette commande de roulis, qui demande une dynamique rapide, étant ainsi découplée des fonctions d'hypersustentation et de réduction de portance, qui sont remplies par des surfaces de commande et/ou de contrôle orientables montées le long des bords de fuite des ailes fixes 5, entre les nacelles 6 et le fuselage 2, et qui constituent des ailerons et/ou volets internes 15, en nombre réduit, pivotant autour d'axes d'articulation Y'-Y' également sensiblement transversaux par rapport au fuselage 2, par exemple deux ailerons et/ou volets 15 par aile 5 (voir figures 2 et 3).

Il en résulte que ce nombre réduit de surfaces orientables internes 15 peut être commandé par un nombre réduit d'actionneurs de dynamique lente, donc simples et économiques. De plus, la structure des surfaces orientables internes 15 peut être simplifiée, et leur nombre peut même être réduit à une surface 15 par aile 5, la nécessité d'un braquage négatif (orientation vers le haut) disparaissant de même que celle d'un braquage dissymétrique entre les deux ailes 5. Dans cette variante et dans ces conditions, une liaison mécanique entre les deux surfaces orientables 15 permet de couvrir simplement le risque d'un embarquement en roulis de l'aéronef 1 lié à un braquage dissymétrique des surfaces orientables 15, fonctionnant simplement comme des volets, mais pouvant également, d'une manière plus générale, fonctionner comme des élevons.

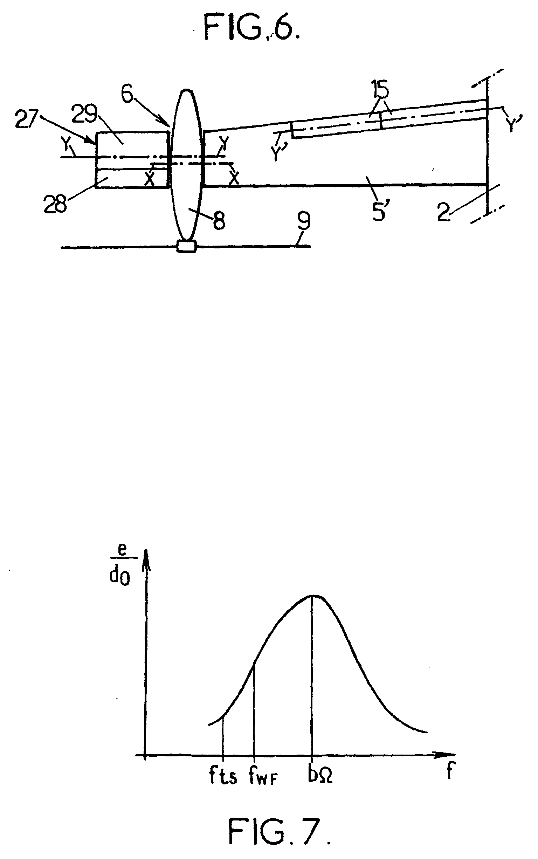

En plus du contrôle du roulis de l'aéronef 1 en mode avion, qui est secondaire, les surfaces orientables externes 13 (ou élevons externes 13) sont utilisées de manière primordiale comme des volets aérodynamiques actifs pilotés automatiquement , pour faire du contrôle actif des vibrations, et en particulier des vibrations naturelles, propres aux rotors 9, générées en axe tournant, et des vibrations liées aux phénomènes dits « tail shake » et « whirl-flutter », ce dernier étant essentiellement une instabilité aéroélastique provenant du couplage entre les rotors 9 et les ailes 5 à haute vitesse en mode avion. Ce contrôle actif, plus précisément décrit ci-dessous en référence aux figures 4 et 5, consiste à développer, comme schématiquement représenté sur la partie gauche de la figure 2, des forces aérodynamiques F2 sur les élevons 13 pour contrer les excitations F1 provoquées par les rotors 9 notamment, le vérin de manoeuvre de chaque élevon 13 pilotant en permanence et automatiquement les oscillations d'incidence de ce dernier, génératrices d'efforts aérodynamiques, en recevant les ordres du calculateur asservissant le vérin en déplacement et calculant ces ordres de commande à partir, par exemple, de signaux provenant de capteurs accélérométriques, de gyromètres, et de capteurs d'efforts situés en différents points du convertible tels que des points déterminés dans le fuselage 2 et/ou sur les rotors 9 et/ou sur les empennage(s) et dérive(s) 4. Chaque élevon externe 13 peut être piloté en incidence autour de son axe d'articulation Y-Y, à l'encontre de moyens élastiques, qui rappellent l'élevon 13 en position neutre, en l'absence de sollicitation de la part du vérin de manoeuvre, ces moyens élastiques ayant en outre deux fonctions, qui sont de reprendre les efforts statiques de l'élevon 13, de façon à soulager le vérin de manoeuvre correspondant, et qu'en dynamique la raideur des moyens élastiques, couplée à l'inertie des pièces en mouvement (essentiellement l'élevon 13 et les pièces mobiles de son vérin de manoeuvre) créé un système résonant du deuxième ordre, la fréquence de résonance des pièces en mouvement étant ajustée sur la fréquence d'excitation, ce qui permet de réduire considérablement les efforts de commande et donc la taille du vérin de manoeuvre.

On réalise ainsi un système anti-vibratoire actif, auto-piloté et auto-adaptatif, basé sur l'injection d'efforts aérodynamiques supplémentaires, introduits par la commande des élevons externes 13, pour minimiser les vibrations dans toutes les parties non-pivotantes de l'aéronef 1 en particulier le fuselage 2, les empennage(s) et dérive(s) 4, les ailes fixes 5 et les parties arrière non pivotantes 7 des nacelles 6.

L'utilisation des élevons externes 13 en contrôle actif de vibrations permet donc de réduire la raideur, et donc la masse, des ailes 5 pour une vitesse maximale donnée, et/ou d'augmenter cette vitesse maximale de l'aéronef 1.

Les élevons externes 13 permettent également, lorsqu'ils sont pilotés comme des volets, et en cas de panne des deux moteurs, de réduire les taux de descente de l'aéronef, en autorotation des deux rotors 9, en participant à la portance de l'aéronef 1 en mode avion, si les élevons 13 sont orientés dans le lit du vent.

Enfin, par leur présence sensiblement en bout des ailes 5, les élevons 13 augmentent l'allongement aérodynamique de la voilure, ce qui réduit la traînée induite et améliore donc les performances en mode avion en montée, en croisière et en finesse (de sorte que le taux de descente est réduit en vol sans puissance).

Comme représenté sur la figure 2, les élevons externes 13 présentent un léger dièdre négatif (vers le bas), qui est accentué au niveau de leur saumon 14, donc dans le sens opposé du dièdre des ailes 5, pour compenser les éventuels effets de ce dièdre positif des ailes 5.

On comprend également que l'utilisation de nacelles 6 partiellement basculantes (à moteur et partie arrière de transmission logés dans la partie arrière fixe 7 de nacelle et rotor 9 basculant avec la partie avant de transmission et la partie avant 8 de la nacelle 6), permet une intégration structurale simple des élevons externes 13 sur les nacelles 6.

En variante, les élevons ou portions externes de voilure 13 peuvent présenter un dièdre nul (être sensiblement horizontales) ou également un dièdre positif, sensiblement dans le prolongement de celui des ailes 5, mais de préférence on donne à ces surfaces externes 13 de voilure un léger dièdre négatif (voir figure 2) donnant à la voilure principale l'aspect d'ailes de mouette.

Dans la variante schématique et partiellement représentée sur la figure 4, on retrouve chaque aile fixe 5' fixée en position haute et surélevée avec un dièdre positif sur la partie supérieure du fuselage 2, et dans cet exemple de forme en plan en trapèze rectangle avec un bord d'attaque 16 à flèche nulle et un bord de fuite 17 à flèche négative et équipé de deux élevons internes 15, et qui supporte à son extrémité externe une nacelle 6, dont au moins la partie avant 8 bascule avec un rotor 9. Un élevon externe 13', de forme en plan en trapèze rectangle dont les bords d'attaque et de fuite prolongent sensiblement ceux respectivement 16 et 17 de l'aile 5', est monté pivotant dans son ensemble, à l'extérieur de la nacelle 6 autour de son axe d'articulation Y-Y. Dans cette variante, l'axe d'articulation Y'-Y' des élevons internes 15 est incliné sur le plan transversal à l'aéronef passant par l'axe d'articulation Y-Y de l'élevon externe 13', alors que dans l'exemple des figures 1 à 3, les axes d'articulation Y'-Y' des élevons internes 15 et ceux Y-Y des élevons externes 13 sont dans des plans transversaux parallèles.

La figure 5 représente schématiquement la commande de l'orientation de chaque élevon externe 13' de la figure 4 autour de son axe d'articulation Y-Y. Pour réaliser un système anti-vibratoire auto-adaptatif basé sur les élevons externes 13 ', l'angle de braquage de chaque élevon externe 13' est piloté par un calculateur 18 recevant en 19 des signaux provenant d'accéléromètres, gyromètres et de capteurs d'efforts disposés en des endroits déterminés notamment du fuselage 2, des rotors 9 et des empennage(s) et dérive(s) 4 de l'aéronef. Le calculateur 18 pilote un vérin d'excitation 20, qui est un vérin linéaire, asservi en déplacement, dont le cylindre 21 prend appui sur un point fixe 22 de la partie arrière fixe 7, par exemple, de la nacelle 6 voisine, ou sur un point fixe 22 de l'aile 5', tandis que le piston et la tige 23 du vérin 20 entraînent un petit levier 24 solidaire de l'élevon 13', en rotation autour de l'axe d'articulation Y-Y, et à l'encontre d'un ressort 25 d'accords statique et dynamique, sollicitant également le levier 24 par une extrémité et prenant appui par son autre extrémité sur un autre point fixe 26 de la structure de la nacelle 6 voisine ou de l'aile 5'. Les déplacements linéaires alternatifs de la tige de vérin 23, schématisés par une double flèche sous le vérin 20, sont ainsi transformés en rotations alternatives de l'élevon 13' autour de son axe d'articulation Y-Y, selon la double flèche courbe à l'avant de cet élevon 13' sur la figure 5. Ainsi, le pilotage de l'angle de braquage de l'élevon externe 13', grâce au calculateur 18 et au vérin 20, permet de générer des forces aérodynamiques (telles que F2 sur la figure 2) dirigées contre les forces d'excitation des rotors 9 (telles que F1 sur la figure 2). On peut ainsi minimiser le niveau vibratoire dans le fuselage, les empennage(s) et dérive(s) et les ailes fixes de l'aéronef, en particulier en mode avion. Schématiquement, les excitations des rotors 9 sont contrées par la portance sur les élevons externes 13' ou 13 des exemples des figures 1 à 4. Comme indiqué ci-dessus, le ressort 25 reprend les efforts statiques de l'élevon 13' de façon à soulager le vérin 20, et, en dynamique, la raideur du ressort 25 couplée à l'inertie de l'ensemble en déplacement, comportant principalement l'élevon 13' avec son levier 24, le piston et la tige 23 du vérin 20 et le ressort 25, créé un système résonant du deuxième ordre, la fréquence de résonance de cet ensemble en déplacement étant ajustée sur la fréquence d'excitation du vérin 20, ce qui permet de réduire les efforts de commande délivrés par le vérin 20, et donc la puissance et l'encombrement de ce dernier.

Il convient de noter que la commande du vérin 20 par le calculateur 18 de contrôle des vibrations est neutralisée pendant la commande du vérin 20 par les commandes pilotes, pour piloter l'élevon 13 ou 13' en gouverne de profondeur ou de gauchissement.

Ainsi, à titre d'exemple, un élevon externe tel que 13 ou 13', mais de forme en plan sensiblement rectangulaire, d'une corde de 0,56 m et d'une envergure de 0,25 m, et piloté avec une amplitude d'angle de braquage de $\pm$ 5°, suffit pour agir contre une force d'excitation de 1000 N, à la vitesse maximale de l'aéronef en mode avion d'environ 150 m/s, la masse estimée par élevon étant d'environ 2 kg.

Pour produire une bonne influence sur l'évolution du niveau vibratoire dû aux forces dynamiques, les élevons externes 13 ou 13' sont réalisés de sorte que leur centre de gravité soit en avant de leur centre de rotation, sur l'axe d'articulation Y-Y, le centre de rotation étant lui-même positionné sur leur foyer aérodynamique, pour éviter les moments dûs à la force aérodynamique. Ceci permet de minimiser les efforts de pilotage.

Chaque portion externe de voilure, à l'extérieur des nacelles 6, peut ne pas être totalement une surface orientable, mais peut au contraire, comme schématiquement représenté sur la figure 6, qui représente une variante de la figure 4, être une portion externe de voilure 27 dont une partie avant, le long de son bord d'attaque, est une portion d'aile externe 28 fixe, à l'arrière de laquelle une partie orientable 29 est montée pivotante autour de l'axe d'articulation Y-Y, et constitue la surface de commande et/ou de contrôle orientable fonctionnant comme un aileron et/ou comme un volet, et donc analogue à l'élevon 13 ou 13' des exemples précédents.

Dans les exemples des figures 1 à 3, 4 et 6, les élevons externes 13, 13', 29, introduisent dans la structure fixe des nacelles 6 ou des ailes fixes 5 ou 5', des efforts tranchants et moments de flexion, mais pas ou peu de moments de torsion, lorsque leur axe d'articulation Y-Y passe sensiblement par le centre de torsion des ailes fixes 5 ou 5'.

En décalant l'axe d'articulation Y-Y des élevons 13, 13', 29 vers l'avant ou l'arrière par rapport au centre de torsion des ailes fixes 5 ou 5', les élevons peuvent de plus introduire dans la structure des ailes 5 ou 5' des moments de torsion éventuellement nécessaires dans le cas de manifestation du phénomène de « whirl-flutter », et pour contrer ce phénomène.

Dans tous les exemples de réalisation, les élevons 13, 13' et 29 sont donc auto-pilotés pour atténuer dans la structure du convertible des vibrations qui sont au moins des trois types précités, à savoir les vibrations résultant des phénomènes de « whirl flutter » et « tail shake » et les vibrations générées par les rotors en fonctionnement normal.

Concernant le phénomène de « whirl flutter », ou flottement gyroscopique, on comprend que, si l'un des rotors 9 du convertible est écarté de son plan de rotation, par exemple sous l'effet d'une rafale de vent, de la rupture d'un élément d'aile modifiant les raideurs de l'aile, etc ..., il se produit des variations parasites de l'angle d'incidence des pales de ce rotor 9, ce qui induit des forces aérodynamiques supplémentaires qui « excitent » ce rotor 9 et entretiennent le mouvement. L'aile fixe 5 ou 5' correspondante est alors déformée, ce qui peut à nouveau accentuer le déplacement du rotor 9 par rapport à son plan de rotation, et ainsi de suite, de sorte que si la raideur de l'aile 5 ou 5' n'est pas suffisante pour amortir ces mouvements et ramener l'ensemble en position d'équilibre, le phénomène diverge jusqu'à la rupture d'éléments mis en cause sur l'aile 5 ou 5' et/ou sur le rotor 9 correspondant.

En conséquence, le mouvement de l'aile 5 ou 5' est un mouvement global de flexion et torsion qui se traduit notamment par un déplacement vertical prépondérant de l'aile 5 ou 5'. Ce mouvement, et les vibrations qu'il engendre sont précisément le mouvement et les vibrations que l'élevon 13, 13' ou 27 doit atténuer puis annuler.

Ce phénomène d'instabilité correspond à une fréquence de l'ordre de 4 à 6 Hz environ.

Concernant le phénomène vibratoire dit « tail shake », il s'agit de vibrations des parties arrière 7 des nacelles 6 et de la partie arrière du fuselage 2 d'un aéronef convertible dont ces parties arrière sont excitées par le souffle des rotors 9, et ces vibrations se développent à des fréquences de quelques hertz et fréquemment proches de 4 Hz.

Concernant les vibrations générées par les rotors 9 en fonctionnement normal, ou vibrations naturelles, propres aux rotors 9, générées en axe tournant, on sait que ces vibrations sont de trois niveaux, à savoir en $Kb\Omega$ et en $(Kb\pm1)\Omega$, où b et $\Omega$ sont respectivement le nombre de pales et la fréquence de rotation de chaque rotor 9, et K est un nombre entier au moins égal à 1. Mais, quelle que soit la nature de l'excitation du rotor (en battement ou trainée) et quels que soient le niveau et la position (avec K = 1, 2, 3, 4, ...) de la fréquence d'excitation, les excitations en repère fixe, en pompage, flexion, torsion, se produisent aux fréquences $Kb\Omega$.

En d'autres termes, en axe fixe, c'est-à-dire au niveau du fuselage 2 et des empennage(s) et dérive(s) 4 ainsi que des ailes fixes 5 ou 5' et des parties arrière fixe 7 des nacelles 6 du convertible, seules les vibrations en $Kb\Omega$ sont ressenties.

Comme les fréquences les plus désagréables pour l'Homme (donc pour l'équipage et les passagers) sont les plus basses, on se préoccupe prioritairement au moins d'atténuer, et si possible d'annuler, les vibrations à la fréquence $b\Omega$, pour K=1, et en particulier à la fréquence $3\Omega$ lorsque chacun des deux rotors 9 du convertible est un rotor tripale. Compte tenu de la vitesse nominale de rotation de chaque rotor 9, de l'ordre de 400 tr/mn, $\Omega$ est de l'ordre de 6 à 7 Hz, de sorte que les forces excitatrices à annuler sont à des fréquences de l'ordre de 18 à 21 Hz, soit environ 20 Hz, ce qui constitue une fréquence de pilotage relativement élevée.

Comme la fréquence de résonance de l'ensemble en déplacement de la figure 5, comprenant essentiellement l'élevon 13' et son levier 24, le piston et la tige 23 du vérin 20 ainsi que le ressort 25, est une fréquence f telle que

$$f = \frac{1}{2\pi} \cdot \sqrt{\frac{k}{l}},$$

où k est la raideur du ressort (25) et l est l'inertie de cet ensemble en déplacement, ce dernier est réalisé de sorte que sa fréquence de résonance f soit accordée par construction à la principale fréquence à amortir $b\Omega$, soit environ 20 Hz dans le cas de rotors 9 tripales.

Ainsi, le calculateur 18 commande le vérin 20 de sorte que sa fréquence d'excitation soit normalement ajustée sur bΩ qui est égale à f. Ceci permet d'obtenir le déplacement de l'élevon 13, 13' ou 29 avec un minimum d'efforts à fournir par le vérin 20. En effet, un système mécanique qui oscille à sa fréquence de résonance nécessite un très faible apport d'énergie pour être mis en mouvement. On peut donc utiliser un vérin 20 de petites dimensions, ce qui répond au but recherché d'un gain de masse et de volume notamment.

L'élevon 13, 13' ou 29 présente donc des dimensions limitées pour avoir une faible inertie, afin qu'il soit aisé de le déplacer à des fréquences de l'ordre de 20 Hz, ce qui nécessite un système à forte dynamique.

A titre d'exemple, un élevon de forme en plan rectangulaire, pour un aéronef convertible dont chacun des deux rotors 9 a un diamètre d'environ 9 à 10 m, avec une distance de 12 à 15 m entre les axes des deux rotors 9, est un élevon réalisé en fibres de carbone et d'une masse de 4 kg présentant une surface en plan de 0,25 m$^2$ par exemple, d'une corde de 0,5 m et d'une envergure de 0,5 m, cet élevon étant calé avec une incidence moyenne de 5°.

On comprend que cette fonction de l'amortissement principal des vibrations en bΩ ne peut absolument pas être remplie par des volets internes (entre les nacelles 6 et le fuselage 2) ou par le basculement d'une partie d'aile interne, car, dans ces deux cas, l'inertie en rotation de ces éléments internes est très importante, en raison de leurs grandes dimensions, imposées notamment par la corde de l'aile et l'épaisseur de l'aile (proportionelle à la corde) à cet endroit, de sorte qu'on ne peut pas atteindre des fréquences de pilotage suffisamment élevées. En particulier, la bande passante de volets internes est trop basse, puisque de l'ordre de 2 à 3 Hz seulement.

Revenant sur le système anti-vibratoire actif, auto-piloté et auto-adaptatif de la figure 5, ce système présente l'avantage que l'on profite d'une amplification dynamique de sorte que le pilotage de l'élevon 13' peut se faire avec des efforts de commande très faibles sur le vérin 20, l'ensemble en déplacement comprenant l'élevon 13' et son levier 24, le piston et la tige 23 du vérin 20 et le ressort 25, procurant déjà par lui-même, lorsqu'il fonctionne en système mécanique passif, une amplification importante, schématisée par la courbe en cloche de la figure 7, qui représente l'évolution, en fonction de la fréquence f, du rapport e/d0 de l'amplitude des mouvements au niveau de l'élevon 13' sur l'amplitude des excitations au niveau du vérin 20. Ce rapport d'amplification e/d0 est maximum pour la fréquence de résonance de l'ensemble en déplacement (13'-24-23-25) de la figure 5, dont la construction est telle que cette fréquence propre est accordée sur la fréquence bΩ. Le maximum d'efficacité est ainsi obtenu pour cette fréquence bΩ. Ce rapport d'amplification, qui est de l'ordre de 4 par exemple au sommet de la courbe de la figure 7, est inférieur, mais néanmoins toujours supérieur à 1, pour la fréquence fts, de l'ordre de 4 Hz, à laquelle se produit le phénomène de « tail shake » ainsi que pour la fréquence fWF, comprise sensiblement entre 4 à 6 Hz et par exemple de l'ordre de 5 Hz, avec laquelle se manifeste de phénomène de « whirl flutter ». On comprend que le système de la figure 5 ne peut contrer, avec une efficacité maximale, qu'une seule fréquence d'excitation à la fois, en l'occurrence la fréquence bΩ. Toutefois, bien que ce système soit construit pour atténuer avec la plus grande efficacité les vibrations à la fréquence bΩ, les excitations qui se produisent à d'autres fréquences telles que fts et fWF, sont également atténuées, mais de façon moins efficace.

Cependant, pour atténuer et, éventuellement, supprimer les vibrations résultant des phénomènes de « whirl flutter » et « tail shake » lorsque les capteurs embarqués sur le convertible détectent la survenance de ces phénomènes, le calculateur 18 commande, transitoirement, la fréquence d'excitation du vérin 20 de sorte que cette fréquence n'est plus ajustée sur la fréquence normale de fonctionnement à bΩ, mais sur une fréquence d'environ 4 Hz à environ 6 Hz, en cas de « whirl flutter », ou sur une fréquence de l'ordre de 4 Hz en cas de « tail shake », le calculateur 18 ajustant ensuite à nouveau la fréquence d'excitation du vérin 20 sur la fréquence bΩ dès que le phénomène de « whirl flutter » ou de « tail shake » a été suffisamment atténué, voire supprimé, ce que le calculateur 18 peut déterminer en fonction des informations reçues en 19 des capteurs embarqués.

De même, lorsque la fréquence Ω de rotation des rotors 9 varie, ce qui est également détecté par les capteurs d'efforts, accélérométriques et gyrométriques embarqués, le calculateur 18 peut ajuster la fréquence d'excitation du vérin 20 pour l'adapter à la nouvelle fréquence bΩ ainsi obtenue. Le calculateur 18 permet ainsi une adaptation aux variations, en général d'amplitude limitée, de la fréquence de rotation des rotors 9.

Les élevons 13, 13', 29 sont ainsi commandés à une fréquence sensiblement ajustée sur celles des phénomènes vibratoires à atténuer, voire supprimer, par le calculateur 18 recevant des signaux 19, identifiant les régimes vibratoires, à partir des capteurs montés en différents points du convertible et sensibles aux efforts d'excitation appliqués en particulier au fuselage 2 à partir des deux ensembles rotor 9-élevon 13, 13' ou 29 qui sont soumis aux différentes excitations aéroélastiques et vibratoires précitées. D'une manière générale, les capteurs d'efforts, accélérométriques et gyrométriques renseignant le calculateur 18 peuvent être disposés en n'importe quel point de l'aéronef convertible. Les deux élevons 13, 13' ou 29 sont pilotés ensemble par le même calculateur 18, jusqu'à obtenir une configuration qui rend minimum le niveau vibratoire mesuré.

La disposition des élevons 13, 13' et 29 en bout d'aile, c'est-à-dire selon l'envergure à l'extérieur des nacelles 6 portées aux extrémités des ailes fixes 5 ou 5', apparaît optimale pour les raisons suivantes :

-   les excitations essentielles proviennent des rotors 9, ces derniers étant eux-mêmes à l'extrémité des ailes fixes 5 ou 5', de sorte que ces excitations essentielles sont d'autant plus faciles à contrer que les résultantes de la portance des élevons 13, 13' ou 29 sont proches des forces excitatrices (donc pas de moment résultant sur les ailes 5 ou 5'),

- la disposition des élevons 13, 13' ou 29 à l'extérieur des nacelles 6 permet d'éviter des interactions défavorables sur les ailes 5 ou 5' elles-mêmes ou avec les volets de pilotage 15 de ces ailes, alors que de telles interactions, notamment des interférences tourbillonnaires, seraient provoquées sur les volets 15 par un élevon piloté à grande fréquence et disposé à l'intérieur des nacelles 6 (entre les nacelles 6 et le fuselage 2),

- c'est au niveau de l'élevon 13, 13' ou 29, à l'extérieur d'un ensemble aile fixe 5 ou 5'-nacelle 6, que la déformée modale de cet ensemble est la plus importante ; à effort constant, c'est donc à ce niveau que l'efficacité d'un système à élevon tel que 13' et ressort tel que 25 sur la figure 5 est maximale ; autrement dit, comme le travail des forces extérieures est égal au produit de l'effort par le déplacement (ou par une rotation), pour une variation angulaire, à effort constant, le maximum d'efficacité est obtenu en raison des flèches et/ou rotations dynamiques à l'extrémité externe des ensembles aile-nacelle.

On peut ainsi équiper les aéronefs convertibles de systèmes antivibratoires actifs et auto-adaptatifs, offrant des capacités d'adaptation optimale en vol en mode avion, quelles que soient les conditions de masse, de centrage, de dispersion de structure et de régime de rotation. En effet, à partir des signaux provenant des capteurs d'accélération, gyromètres, et/ou d'efforts dans le fuselage 2 et sur les rotors 9, un ou plusieurs calculateurs tels que 18 élabore(nt) une commande pilotant des vérins tels que 20 qui manoeuvrent les élevons externes tels que 13, 13' ou 29, qui génèrent des efforts aérodynamiques destinés à contrer les vibrations. Les efforts délivrés par les élevons, manoeuvrés par les vérins, sont ajustés en permanence en fonction du niveau vibratoire, de telle sorte que celui-ci soit minimal au sens d'un critère donné, par exemple un critère de moindre-carrés ou autre.

Bien entendu, l'invention présentée ci-dessus n'est pas limitée aux aéronefs convertibles à nacelles motrices articulées, comme décrit dans FR 99 03735 et FR 99 03956, mais s'applique également aux aéronefs convertibles à nacelles motrices totalement basculantes avec les rotors, comme décrit dans US-5,054,716.

## Revendications

1. Procédé de contrôle actif des vibrations d'un aéronef convertible à rotors basculants, pouvant évoluer en mode avion et en mode hélicoptère, et comprenant au moins un fuselage (2), au moins un empennage avec au moins une dérive (4), une voilure fixe comportant au moins deux ailes (5, 5') s'étendant latéralement de part et d'autre dudit fuselage (2), et, en mode hélicoptère, une voiture tournante comportant au moins deux rotors (9), dont chacun est supporté et entraîné en rotation par l'une respectivement de deux nacelles (6) motrices supportées chacune par l'une respectivement des deux ailes fixes (5, 5') s'étendant du fuselage (2) jusqu'à la nacelle (6) correspondante, chaque rotor (9) étant monté basculant avec au moins une partie avant (8), qui supporte ledit rotor (9), de la nacelle (6) correspondante, sur l'aile fixe (5, 5') correspondante et autour d'un axe de basculement (X-X), sensiblement transversal par rapport au fuselage (2), pour passer de l'un à l'autre du mode hélicoptère et du mode avion, dans lequel les rotors (9) servent d'hélice, chaque aile fixe (5, 5') étant prolongée, sensiblement selon son envergure et vers l'extérieur de la nacelle (6) correspondante par rapport au fuselage (2), par au moins une portion externe (13, 13', 27) de voilure, dont au moins une partie (13, 13', 29) pivote, indépendamment du rotor (9) et d'au moins la partie avant (8) de la nacelle (6) correspondante, autour d'un axe d'articulation (Y-Y) sensiblement transversal à l'aéronef (1) et constitue une surface de commande et/ou de contrôle orientable, dont les pivotements autour de l'axe d'articulation (Y-Y) sont commandés par au moins un actionneur piloté (20), le procédé étant **caractérisé en ce qu'**il consiste à commander les pivotements de ladite surface de commande et/ou de contrôle (13, 13', 29) au moins à une fréquence de l'ordre de KbΩ, où b et Ω sont respectivement le nombre de pales et la fréquence de rotation de chaque rotor, et K un nombre entier au moins égal à 1, de sorte à au moins atténuer, au niveau du fuselage (2), des ailes fixes (5, 5') et des empennage(s) et dérive(s) (4), au moins les vibrations générées naturellement par chaque rotor (9) en rotation.

2. Aéronef convertible à rotors basculants, pouvant évoluer en mode avion et en mode hélicoptère, et comprenant au moins un fuselage (2), au moins un empennage avec au moins une dérive (4), une voilure fixe comportant au moins deux ailes (5, 5') s'étendant latéralement de part et d'autre dudit fuselage (2), et, en mode hélicoptère, une voilure tournante comportant au moins deux rotors (9), dont chacun est supporté et entraîné en rotation par l'une respectivement de deux nacelles (6) motrices supportées chacune par l'une respectivement des deux ailes fixes (5, 5') s'étendant du fuselage (2) jusqu'à la nacelle (6) correspondante, chaque rotor (9) étant monté basculant avec au moins une partie avant (8), qui supporte ledit rotor (9), de la nacelle (6) correspondante, sur l'aile fixe (5, 5') correspondante et autour d'un axe de basculement (X-X), sensiblement transversal par rapport au fuselage (2), pour passer de l'un à l'autre du mode hélicoptère et du mode avion, dans lequel les rotors (9) servent d'hélice, chaque aile fixe (5, 5') étant prolongée, sensiblement selon son envergure et vers l'extérieur de la nacelle(6) correspondante par rapport au fuselage (2), par au moins une portion externe (13, 13', 27) de voilure, dont au moins une partie (13, 13', 29) pivote, indépendamment du rotor (9) et d'au moins la partie avant (8) de la nacelle (6) correspondante, autour d'un axe d'articulation (Y-Y) sensiblement transversal à l'aéronef (1) et constitue une surface de commande et/ou de contrôle orientable, dont les pivotements autour de l'axe d'articulation (Y-Y) sont commandés par au moins un actionneur piloté (20), **caractérisé en ce qu'**il comprend un système antivibratoire actif autopiloté, avec au moins un calculateur (18) de contrôle actif de vibrations commandant ledit au moins un actionneur piloté (20) faisant pivoter ladite surface de commande et/ou de contrôle orientable autour dudit axe d'articulation (Y-Y) au moins à une fréquence de l'ordre de KbΩ, où b et Ω sont respectivement le nombre de pales et la fréquence de rotation de chaque rotor, et K un nombre entier au moins égal à 1, de sorte à au moins atténuer, au niveau du fuselage (2), des ailes fixes (5, 5') et des empennage(s) et dérive(s) (4), au moins les vibrations générées naturellement par chaque rotor (9) en rotation.

3. Aéronef convertible selon la revendication 2, **caractérisé en ce que** ledit au moins un actionneur piloté (20) commande transitoirement les pivotements de ladite surface de commande et/ou de contrôle orientale (13, 13', 29) à une fréquence inférieure à KbΩ et de l'ordre de 4 à 6 Hz pour contrer le phénomène de « whirt flutter ».

4. Aéronef convertible selon l'une des revendications 2 et 3, **caractérisé en ce que** ledit au moins un actionneur piloté (20) commande transitoirement les pivotements de ladite surface de commande et/ou de contrôle orientable (13, 13', 29) à une fréquence inférieure à KbΩ et de l'ordre de quelques Hz, en général de l'ordre de 4 Hz, pour contrer le phénomène de « tail shake ».

5. Aéronef convertible selon l'une quelconque des revendications 2 à 4, **caractérisé en ce que** ledit actionneur est un vérin d'excitation (20), asservi en déplacement, manoeuvrant ladite surface de commande et/ou de contrôle orientable (13, 13', 29), à l'encontre de moyens élastiques (25) d'accords statique et dynamique, et piloté automatiquement par ledit au moins un calculateur (18) de contrôle actif de vibrations, qui est autoadaptatif et pilote ledit vérin (20) à partir de signaux (19) reçus de capteurs, notamment d'efforts, accélérométriques et gyromètriques, disposés en au moins des points déterminés dudit fuselage (2) et/ou des rotors (9) et/ou des empennage(s) et dérive(s) (4).

6. Aéronef convertible selon la revendication 5, **caractérisé en ce que** les moyens élastiques ( 25) reprennent les efforts statiques de ladite surface orientable (13, 13', 29), et, en dynamique, leur raideur est couplée à l'inertie de l'ensemble en déplacement comprenant au moins ladite surface orientable (13, 13', 29) et des parties mobiles (23) dudit vérin (20) de sorte à créer un système résonant du deuxième ordre, la fréquence de résonance de l'ensemble en déplacement étant ajustée sur la fréquence d'excitation du vérin (20).

7. Aéronef convertible selon la revendication 6, **caractérisé en ce que** ledit ensemble en déplacement (13, 13', 29 ; 23) a une fréquence de résonance

$$f = \frac{1}{2\pi} \cdot \sqrt{\frac{k}{l}},$$

où k est la raideur des moyens élastiques (25) et l est l'inertie de l'ensemble en déplacement (13, 13', 29 ; 23), et la fréquence d'excitation du vérin (20) est normalement ajustée sur bΩ, tel que bΩ est sensiblement égal à f.

8. Aéronef convertible selon la revendication 7, **caractérisé en ce que** tes deux rotors (9) sont des rotors tripales, et la fréquence d'excitation du vérin (20) est normalement ajustée sensiblement sur une fréquence d'environ 20 Hz.

9. Aéronef convertible selon l'une quelconque des revendications 5 à 8, **caractérisé en ce que** la fréquence d'excitation du vérin (20) est transitoirement ajustée sur une fréquence d'environ 4 Hz à environ 6 Hz, lorsque lesdits capteurs détectent des signaux (19) témoignant de l'un au moins des phénomènes de « tail shake » et « whirl flutter », puis à nouveau ajustée sensiblement sur la fréquence bΩ.

10. Aéronef convertible selon l'une quelconque des revendications 5 à 9, **caractérisé en ce que** le vérin (20) d'excitation est également pilotable par des commandes pilotes, notamment de gauchissement.

11. Aéronef convertible selon la revendication 10, **caractérisé en ce que** la commande du vérin d'excitation (20) par le calculateur (18) de contrôle de vibrations est neutralisée pendant la commande dudit vérin d'excitation (20) par les commandes pilotes.

12. Aéronef convertible selon l'une quelconque des revendications 2 à 11, **caractérisé en ce que** ladite portion externe (13, 13') de voilure est une partie d'aile externe entièrement pivotante autour de l'axe d'articulation (Y-Y) et constituant un élevon.

13. Aéronef convertible selon l'une quelconque des revendications 2 à 11, **caractérisé en ce que** ladite partie pivotante (29) de la portion externe de voilure (27) est un élevon pivotant de bord de fuite d'une portion d'aile externe et fixe (28).

14. Aéronef convertible selon l'une quelconque des revendications 2 à 13, **caractérisé en ce que** chaque aile fixe (5, 5') comprend au moins une surface de commande et/ou de contrôle interne (15), entre la nacelle (6) correspondante et le fuselage (2), et qui pivote autour d'un second axe d'articulation (Y'-Y') sensiblement transversal à l'aéronef (1).

15. Aéronef convertible selon l'une quelconque des revendications 2 à 14, **caractérisé en ce que** les ailes fixes (5, 5') sont des ailes hautes solidarisées à la partie supérieure du fuselage (2), et de préférence surélevées (11) par rapport à la partie supérieure du fuselage (2).

16. Aéronef convertible selon la revendication 15, **caractérisé en ce que** les ailés fixes et hautes (5) présentent un dièdre vers le haut (dièdre positif) entre le fuselage (2) et les nacelles (6).

17. Aéronef convertible selon la revendication 16, **caractérisé en ce qu'**à l'extérieur des nacelles (6), lesdites portions externes (13) de voilure sont également en dièdre vers le haut.

18. Aéronef convertible selon la revendication 16, **caractérisé en ce qu'**à l'extérieur des nacelles (6), lesdites portions extemes (13) de voilure présentent un dièdre nul (sont sensiblement horizontales).

19. Aéronef convertible selon la revendication 16, **caractérisé en ce qu'**à l'extérieur des nacelles (6), lesdites portions extemes (13) de voilure présentent un dièdre vers le bas, de sorte que la voilure fixe de l'aéronef (1) est sensiblement en ailes de mouette.

20. Aéronef convertible selon l'une quelconque des revendications 2 à 19, **caractérisé en ce que** l'axe d'articulation (Y-Y) des parties pivotantes (13, 13', 29) des portions extemes de voilure (13, 13', 27) est décalé vers l'avant ou vers l'arrière des centres de torsion des ailes fixes (5, 5').

**Patentansprüche**

1. Verfahren zur aktiven Kontrolle der Vibrationen eines Kipprotoren-Verwandlungsluftfahrzeuges, das im Flugzeugmodus und im Hubschraubermodus betrieben werden kann und wenigstens einen Rumpf (2), wenigstens ein Leitwerk mit wenigstens einer Leitfläche (4), ein festes Tragwerk mit wenigstens zwei sich seitlich beiderseits des Rumpfes (2) erstreckenden Flügeln (5, 5') und im Hubschraubermodus ein Drehflügeltragwerk mit wenigstens zwei Rotoren (9) enthält, die jeweils durch die eine bzw. die andere von zwei Motorgondeln (6) getragen und drehangetrieben werden, die jeweils durch den einen bzw. den anderen der beiden festen Flügel (5, 5') getragen werden, die sich vom Rumpf (2) bis zur entsprechenden Gondel (6) erstrecken, wobei jeder Rotor (9) mit wenigstens einem diesen Rotor (9) tragenden Vorderteil (8) der entsprechenden Gondel (6) am entsprechenden festen Flügel (5, 5') und um eine in Bezug auf den Rumpf (2) im wesentlichen quer verlaufende Kippachse (X-X) kippbar angebracht ist, um zwischen dem Hubschraubermodus in den Flugzeugmodus umzuwechseln, bei dem die Rotoren (9) als Propeller dienen, wobei jeder feste Flügel (5, 5') im wesentlichen der Spannweite nach und in Bezug auf den Rumpf (2) außerhalb der entsprechenden Gondel (6) durch wenigstens einen Tragwerkaußenteil (13, 13', 27) verlängert ist, von dem wenigstens ein Teil (13, 13', 29) unabhängig vom Rotor (9) und zumindest vom Vorderteil (8) der entsprechenden Gondel (6) um eine zum Luftfahrzeug (1) im wesentlichen quer verlaufende Gelenkachse (Y-Y) schwenkbar ist und eine ausrichtbare Steuer- und/oder Kontrollfläche bildet, deren Schwenkungen um die Gelenkachse (Y-Y) durch wenigstens eine geführte Betätigungseinrichtung (20) gesteuert werden, wobei das Verfahren **dadurch gekennzeichnet ist, dass** es darin besteht, die Schwenkungen der Steuer- und/oder Kontrollfläche (13, 13', 29) mit wenigstens einer Frequenz in der Größenordnung von KbΩ zu steuern, wobei b und Ω die Anzahl von Blättern bzw. die Drehzahl jedes Rotors und K eine ganze Zahl von wenigstens gleich 1 sind, um wenigstens im Bereich des Rumpfes (2), der festen Flügel (5, 5') und des/der Leitwerks/Leitwerke und der Leitfläche/n (4) zumindest die Vibrationen zu dämpfen, die naturgemäß durch jeden Rotor (9) bei Drehung erzeugt werden.

2. Kipprotoren-Verwandlungsluftfahrzeug, das im Flugzeugmodus und im Hubschraubermodus betrieben werden kann und wenigstens einen Rumpf (2), wenigstens ein Leitwerk mit wenigstens einer Leitfläche (4), ein festes Tragwerk mit wenigstens zwei sich seitlich beiderseits des Rumpfes (2) erstreckenden Flügeln (5, 5') und im Hubschraubermodus ein Drehflügeltragwerk mit wenigstens zwei Rotoren (9) enthält, die jeweils durch die eine bzw. die andere von zwei Motorgondeln (6) getragen und drehangetrieben werden, die jeweils durch den einen bzw. den anderen der beiden festen Flügel (5, 5') getragen werden, die sich vom Rumpf (2) bis zur entsprechenden Gondel (6) erstrecken, wobei jeder Rotor (9) mit wenigstens einem diesen Rotor (9) tragenden Vorderteil (8) der entsprechenden Gondel (6) am entsprechenden festen Flügel (5, 5') und um eine in Bezug auf den Rumpf (2) im wesentlichen quer verlaufende Kippachse (X-X) kippbar angebracht ist, um zwischen dem Hubschraubermodus in den Flugzeugmodus umzuwechseln, bei dem die Rotoren (9) als Propeller dienen, wobei jeder feste Flügel (5, 5') im wesentlichen der Spannweite nach und in Bezug auf den Rumpf (2) außerhalb der entsprechenden Gondel (6) durch wenigstens einen Tragwerkaußenteil (13, 13', 27) verlängert ist, von dem wenigstens ein Teil (13, 13', 29) unabhängig vom Rotor (9) und zumindest vom Vorderteil (8) der entsprechenden Gondel (6) um eine zum Luftfahrzeug (1) im wesentlichen quer verlaufende Gelenkachse (Y-Y) schwenkbar ist und eine ausrichtbare Steuer- und/oder Kontrollfläche bildet, deren Schwenkungen um die Gelenkachse (Y-Y) durch wenigstens eine geführte Betätigungseinrichtung (20) gesteuert werden, **dadurch gekennzeichnet, dass** es ein selbstgeführtes aktives Antivibrationssystem mit wenigstens einem Rechner (18) zur aktiven Kontrolle von Vibrationen umfasst, wobei dieser wenigstens eine geführte Betätigungseinrichtung (20) steuert, welche die genannte ausrichtbare Steuer- und/oder Kontrollfläche um die Gelenkachse (Y-Y) zumindest mit einer Frequenz in der Größenordnung von KbΩ schwenken lässt, wobei b und Ω die Anzahl von Blättern bzw. die Drehzahl jedes Rotors und K eine ganze Zahl von wenigstens gleich 1 sind, um wenigstens im Bereich des Rumpfes (2), der festen Flügel (5, 5') und des/der Leitwerks/Leitwerke und der Leitfläche/n (4) zumindest die Vibrationen zu dämpfen, die naturgemäß durch jeden Rotor (9) bei Drehung erzeugt werden.

3. Verwandlungsluftfahrzeug nach Anspruch 2, **dadurch gekennzeichnet, dass** die zumindest eine geführte Betätigungseinrichtung (20) die Schwenkungen der ausrichtbaren Steuerund/oder Kontrollfläche (13, 13', 29) vorübergehend mit einer niedrigeren Frequenz als KbΩ und zwar in der Größenordnung von 4 bis 6 Hz steuert, um der "Whirl-Flutter"-Erscheinung entgegenzutreten.

4. Verwandlungsluftfahrzeug nach einem der Ansprüche 2 und 3, **dadurch gekennzeichnet, dass** die zumindest eine geführte Betätigungseinrichtung (20) die Schwenkungen der ausrichtbaren Steuerund/oder Kontrollfläche (13, 13', 29) vorübergehend mit einer niedrigeren Frequenz als KbΩ und zwar in der Größenordnung von einigen Hz, im allgemeinen in der Größenordnung von 4 Hz, steuert, um der "Tail-Shake"-Erscheinung entgegenzutreten.

5. Verwandlungsluftfahrzeug nach einem der Ansprüche 2 bis 4, **dadurch gekennzeichnet, dass** die Betätigungseinrichtung ein verschiebungsgeregelter Erregungszylinder (20) ist, der die ausrichtbare Steuer- und/oder Kontrollfläche (13, 13', 29) entgegen elastischen Mitteln zur statischen und dynamischen Abstimmung betätigt und automatisch durch den zumindest einen Rechner (18) zur aktiven Kontrolle von Vibrationen geführt ist, der selbstanpassend ist und den genannte Zylinder (20) ausgehend von Signalen (19) führt, die von akzelerometrischen und gyrometrischen Sensoren, insbesondere von Kräften, empfangen werden, die an wenigstens einer der bestimmten Stellen des Rumpfes (2) und/oder der Rotoren (9) und/oder des/der Leitwerks/Leitwerke und Leitfläche/n (4) angeordnet sind.

6. Verwandlungsluftfahrzeug nach Anspruch 5, **dadurch gekennzeichnet, dass** die elastischen Mittel (25) die statischen Kräfte der ausrichtbaren Fläche (13, 13', 29) aufnehmen und in der Dynamik ihre Steifigkeit an die Trägheit der in Verschiebung befindlichen Anordnung gekoppelt ist, die wenigstens die ausrichtbare Fläche (13, 13', 29) und bewegliche Teile (23) des Zylinders (20) umfasst, um ein Resonanzsystem zweiter Ordnung zu schaffen, wobei die Resonanzfrequenz der in Verschiebung befindlichen Anordnung auf die Erregungsfrequenz des Zylinders (20) eingestellt ist.

7. Verwandlungsluftfahrzeug nach Anspruch 6, **dadurch gekennzeichnet, dass** die genannte in Verschiebung befindliche Anordnung (13, 13', 29; 23) eine Resonanzfrequenz von

$$f = \frac{1}{2\pi} \cdot \sqrt{\frac{k}{l}}$$

hat, wobei k die Steifigkeit der elastischen Mittel (25) und l die Trägheit der in Verschiebung befindlichen Anordnung (13, 13', 29; 23) ist und die Erregungsfrequenz des Zylinders (20) normalerweise auf bΩ eingestellt ist, so dass bΩ im wesentlichen gleich f ist.

8. Verwandlungsluftfahrzeug nach Anspruch 7, **dadurch gekennzeichnet, dass** die beiden Rotoren (9) Dreiblatt-Rotoren sind und die Erregungsfrequenz des Zylinders (20) normalerweise im wesentlichen auf eine Frequenz von etwa 20 Hz eingestellt ist.

9. Verwandlungsluftfahrzeug nach einem der Ansprüche 5 bis 8, **dadurch gekennzeichnet, dass** die Erregungsfrequenz des Zylinders (20) vorübergehend auf eine Frequenz von etwa 4 Hz bis etwa 6 Hz eingestellt wird, wenn die genannten Sensoren Signale (19) detektieren, die wenigstens auf eine der "Tail-Shake"- und "Whirl-Flutter"-Erscheinungen hindeuten, und dann erneut im wesentlichen auf die Frequenz bΩ eingestellt wird.

10. Verwandlungsluftfahrzeug nach einem der Ansprüche 5 bis 9, **dadurch gekennzeichnet, dass** der Erregungszylinder (20) auch durch Pilotenbefehle führbar ist, insbesondere zur Schränkung.

11. Verwandlungsluftfahrzeug nach Anspruch 10, **dadurch gekennzeichnet, dass** die Steuerung des Erregungszylinders (20) durch den Rechner (18) zur Kontrolle von Vibrationen während der Steuerung des Erregungszylinders (20) durch die Pilotenbefehle aufgehoben wird.

12. Verwandlungsluftfahrzeug nach einem der Ansprüche 2 bis 11, **dadurch gekennzeichnet, dass** der Tragwerkaußenteil (13, 13') ein Flügelaußenteil ist, das ganz um die Gelenkachse (Y-Y) schwenkbar ist und ein Elevon bildet.

13. Verwandlungsluftfahrzeug nach einem der Ansprüche 2 bis 11, **dadurch gekennzeichnet, dass** das schwenkbare Teil (29) des Tragwerkaußenteils (27) ein schwenkbares Hinterkanten-Elevon eines äußeren und festen Flügelteiles (28) ist.

14. Verwandlungsluftfahrzeug nach einem der Ansprüche 2 bis 13, **dadurch gekennzeichnet, dass** jeder feste Flügel (5, 5') wenigstens eine innere Steuer- und/oder Kontrollfläche (15) umfasst, die zwischen der entsprechenden Gondel (6) und dem Rumpf (2) liegt und die um eine zweite, zum Luftfahrzeug (1) im wesentlichen quer verlaufende Gelenkachse (Y'-Y') schwenkbar ist.

15. Verwandlungsluftfahrzeug nach einem der Ansprüche 2 bis 14, **dadurch gekennzeichnet, dass** die festen Flügel (5, 5') Hochdeckerflügel sind, die am oberen Teil des Rumpfes (2) befestigt sind und vorzugsweise in Bezug auf den oberen Teil des Rumpfes (2) erhöht (11) angeordnet sind.

16. Verwandlungsluftfahrzeug nach Anspruch 15, **dadurch gekennzeichnet, dass** die festen und hohen Flügel (5) ein nach oben gerichtetes Dieder (positives Dieder) zwischen dem Rumpf (2) und den Gondeln (6) darstellen.

17. Verwandlungsluftfahrzeug nach Anspruch 16, **dadurch gekennzeichnet, dass** außerhalb der Gondeln (6) die genannten Tragwerkaußenteile (13) auch als nach oben gerichtetes Dieder ausgebildet sind.

18. Verwandlungsluftfahrzeug nach Anspruch 16, **dadurch gekennzeichnet, dass** außerhalb der Gondeln (6) die genannten Tragwerkaußenteile (13) ein Null-Dieder (sind im wesentlichen horizontal) darstellen.

19. Verwandlungsluftfahrzeug nach Anspruch 16, **dadurch gekennzeichnet, dass** außerhalb der Gondeln (6) die genannten Tragwerkaußenteile (13) ein nach unten gerichtetes Dieder darstellen, so dass das feste Tragwerk des Luftfahrzeugs (1) im wesentlichen möwenflügelartig ist.

20. Verwandlungsluftfahrzeug nach einem der Ansprüche 2 bis 19, **dadurch gekennzeichnet, dass** die Gelenkachse (Y-Y) der schwenkbaren Teile (13, 13', 29) der Tragwerkaußenteile (13, 13', 27) vor oder hinter die Torsionszentren der festen Flügel (5, 5') versetzt ist.

**Claims**

1. A method for the active control of the vibrations of a convertible tilt-rotor aircraft which can travel in airplane mode and in helicopter mode, and comprising at least one fuselage (2), at least one empennage with at least one stabilizer (4), a fixed wing structure comprising at least two wings (5, 5') extending laterally on each side of said fuselage (2) and, in helicopter mode, a rotary wing structure comprising at least two rotors (9), each of which is supported and driven in rotation by a respective one of two drive nacelles (6) each supported by a respective one of the two fixed wings (5, 5') extending from the fuselage (2) as far as the corresponding nacelle (6), each rotor (9) being mounted so that it can tilt with at least one front part (8), which supports said rotor (9), of the corresponding nacelle (6) on the corresponding fixed wing (5, 5') and about an axis of tilt (X-X) which is substantially transversal with respect to the fuselage (2), so as to switch between helicopter mode and airplane mode, in which mode the rotors (9) act as propellers, each fixed wing (5, 5') being extended, substantially in the direction of its span and toward the outboard side of the corresponding nacelle (6) with respect to the fuselage (2), by at least one outboard wing portion (13, 13', 27), at least part (13, 13', 29) of which pivots, independently of the rotor (9) and of at least the front part (8) of the corresponding nacelle (6), about an axis of articulation (Y-Y) substantially transversal to the aircraft (1) and constitutes an orientable command and/or control surface, whose pivotings about the axis of articulation (Y-Y) are commanded, by at least one driven actuator (20), the method being **characterized in that** it consists in commanding the pivotings of said command and/or control surface (13, 13', 29) at least at a frequency of the order of KbΩ, where b and Ω are, respectively, the number of blades and the frequency of rotation of each rotor, and K is a whole number at least equal to 1, so as to at least attenuate, at the fuselage (2), the fixed wings (5, 5') and the empennage(s) and stabilizer(s) (4), at least the vibrations generated naturally by the rotation of each rotor (9).

2. A convertible tilt-rotor aircraft which can travel in airplane mode and in helicopter mode, and comprising at least one fuselage (2), at least one empennage with at least one stabilizer (4), a fixed wing structure comprising at least two wings (5, 5') extending laterally on each side of said fuselage (2) and, in helicopter mode, a rotary wing structure comprising at least two rotors (9), each of which is supported and driven in rotation by a respective one of two drive nacelles (6) each supported by a respective one of the two fixed wings (5, 5') extending from the fuselage (2) as far as the corresponding nacelle (6), each rotor (9) being mounted so that it can tilt with at least one front part (8), which supports said rotor (9), of the corresponding nacelle (6) on the corresponding fixed wing (5, 5') and about an axis of tilt (X-X) which is substantially transversal with respect to the fuselage (2), so as to switch between helicopter mode and airplane mode, in which mode the rotors (9) act as propellers, each fixed wing (5, 5') being extended, substantially in the direction of its span and toward the outboard side of the corresponding nacelle (6) with respect to the fuselage (2), by at least one outboard wing portion (13, 13', 27), at least part (13, 13', 29) of which pivots, independently of the rotor (9) and of at least the front part (8) of the corresponding nacelle (6), about an axis of articulation (Y-Y) substantially transversal to the aircraft (1) and constitutes an orientable command and/or control surface, whose pivotings about the axis of articulation (Y-Y) are commanded, by at least one driven actuator (20), **characterized in that** it comprises a self-driven active anti-vibration system with at least one active vibration control computer (18) commanding said at least one driven actuator (20) causing said orientable command and/or control surface to pivot about said axis of articulation (Y-Y) at least at a frequency of the order of KbΩ, where b and Ω are, respectively, the number of blades and the frequency of rotation of each rotor, and K is a whole number at least equal to 1, so as to at least attenuate, at the fuselage (2), the fixed wings (5, 5') and the empennage(s) and stabilizer(s) (4), at least the vibrations generated naturally by the rotation of each rotor (9).

3. The convertible aircraft as claimed in claim 2, **characterized in that** said at least one driven actuator (20) transiently commands the pivoting of said orientable command and/or control surface (13, 13', 29) at a frequency below KbΩ and of the order of 4 to 6 Hz so as to counter the whirl flutter phenomenon.

4. The convertible aircraft as claimed in one of claims 2 and 3, **characterized in that** said at least one driven actuator (20) transiently commands the pivoting of said orientable command and/or control surface (13, 13', 29) at a frequency below KbΩ and of the order of a few Hz, generally of the order of 4 Hz, so as to counter the tail shake phenomenon.

5. The convertible aircraft as claimed in any of claims 2 to 4, **characterized in that** said actuator is an excitation ram (20) slaved in movement, maneuvering said orientable command and/or control surface (13, 13', 29) against the action of static and dynamic tuning elastic means (25) and driven automatically by said at least one active vibration control computer (18) which is self adaptive and drives said ram (20) on the basis of signals (19) received from sensors, particularly load, accelerometer and gyrometer sensors, arranged at least at predetermined points on said fuselage (2) and/or the rotors (9) and/or the empennage(s) and stabilizer(s) (4).

6. The convertible aircraft as claimed in claim 5, **characterized in that** the elastic means (25) absorb the static forces of said orientable surface (13, 13', 29) and, in dynamic terms, their stiffness is coupled to the inertia of the moving assembly comprising at least said orientable surface (13, 13', 29) and moving parts (23) of said ram (20) so as to create a second-order resonant system, the resonant frequency of the moving assembly being tuned to the excitation frequency of the ram (20).

7. The convertible aircraft as claimed in claim 6, **characterized in that** said moving assembly (13, 13', 29; 23) has a resonant frequency

$$ f = \frac{1}{2\pi} \cdot \sqrt{\frac{k}{I}}, $$

where k is the stiffness of the elastic means (25) and I is the inertia of the moving assembly (13, 13', 29; 23) and the excitation frequency of the ram (20) is normally tuned to bΩ such that bΩ is substantially equal to f.

8. The convertible aircraft as claimed in claim 7, **characterized in that** the two rotors (9) are three-bladed rotors, and the excitation frequency of the ram (20) is normally tuned substantially to a frequency of about 20 Hz.

9. The convertible aircraft as claimed in any of claims 5 to 8, **characterized in that** the excitation frequency of the ram (20) is transiently tuned to a frequency of about 4 Hz to about 6 Hz when said sensors detect signals (19) that bear witness to at least one of the phenomena of tail shake and whirl flutter and then tuned back substantially to the frequency bΩ.

10. The convertible aircraft as claimed in any of claims 5 to 9, **characterized in that** the excitation ram (20) can also be driven by pilot controls, particularly warp controls.

11. The convertible aircraft as clamed in claim 10, **characterized in that** command of the excitation ram (20) by the vibration control computer (18) is neutralized while said excitation ram (20) is being commanded by the pilot controls.

12. The convertible aircraft as claimed in any of claims 2 to 11, **characterized in that** said outboard wing portion (13, 13') is an outboard wing part that can entirely pivot about the axis of articulation (Y-Y) and constitutes an elevon.

13. The convertible aircraft as claimed in any of claims 2 to 11, **characterized in that** said pivoting part (29) of the outboard wing portion (27) is a pivoting trailing edge elevon of a fixed and outboard wing portion (28).

14. The convertible aircraft as claimed in any of claims 2 to 13, **characterized in that** each fixed wing (5, 5') comprises at least one inboard command and/or control surface (15) between the corresponding nacelle (6) and the fuselage (2) and which pivots about a second axis of articulation (Y'-Y') substantially transversal to the aircraft (1).

15. The convertible aircraft as claimed in any of claims 2 to 14, **characterized in that** the fixed wings (5, 5') are high wings secured to the upper part of the fuselage (2), and preferably raised (11) with respect to the upper part of the fuselage (2).

16. The convertible aircraft as claimed in claim 15, **characterized in that** the fixed high wings (5) have an upward dihedral angle (positive dihedral angle) between the fuselage (2) and the nacelles (6).

17. The convertible aircraft as claimed in claim 16, **characterized in that** outboard of the nacelles (6), said outboard wing structure portions (13) also have an upward dihedral angle.

18. The convertible aircraft as claimed in claim 16, **characterized in that** outboard of the nacelles (6), said outboard wing structure portions (13) have a zero dihedral angle (are substantially horizontal).

19. The convertible aircraft as claimed in claim 16, **characterized in that** outboard of the nacelles (6), said outboard wing structure portions (13) have a downward dihedral angle so that the fixed wing structure of the aircraft (1) is substantially in the form of gull wings.

20. The convertible aircraft as claimed in any of claims 2 to 19, **characterized in that** the axis of articulation (Y-Y) of the pivoting parts (13, 13', 29) of the outboard wing structure portions (13, 13', 27) is offset forward or backward from the centers of twist of the fixed wings (5, 5').

# FIG.1.

# FIG.3.

FIG. 2.

FIG.4.

FIG.5.

# FIG.6.

# FIG.7.